# FASCICULE DE BREVET EUROPEEN

(11) **EP 4 584 948 B1**
(45) Date de publication et mention de la délivrance du brevet: **06.05.2026**
(21) Numéro de dépôt: 23764334.1
(22) Date de dépôt: 07.09.2023
(51) Int. Cl.: H04N 7/18, G08B 13/19

(54) **PROCEDE DE TRANSMISSION DE DONNEES DE DETECTION D'OBJETS TYPES, PROCEDE DE TRAITEMENT DANS UN DISPOSITIF ELECTRONIQUE RECEPTEUR DE DONNEES DE DETECTION TRANSMISES PAR UNE PLURALITE DE DISPOSITIFS D'ACQUISITION; DISPOSITIFS EMETTEUR ET RECEPTEUR ASSOCIES**
VERFAHREN ZUR ÜBERTRAGUNG VON TYPOBJEKTERKENNUNGSDATEN, VERARBEITUNGSVERFAHREN FÜR EIN ELEKTRONISCHES GERÄT
METHOD FOR TRANSMITTING TYPE OBJECT DETECTION DATA, METHOD FOR PROCESSING AN ELECTRONIC DEVICE RECEIVING DETECTION DATA TRANSMITTED BY A PLURALITY OF ACQUISITION DEVICES; ASSOCIATED TRANSMITTER AND RECEIVER DEVICES

(30) Priorité: 08.09.2022 FR 2208992
(43) Date de publication de la demande: 16.07.2025
(73) Titulaire: THALES, 92190 Meudon (FR)
(72) Inventeur: PESQUET-POPESCU, Béatrice, 91470 LIMOURS (FR); THEBAULT, Didier, 92622 GENNEVILLIERS Cedex (FR)
(74) Mandataire: Atout PI Laplace
(86) Numéro de dépôt international: PCT/EP2023/074610
(87) Numéro de publication internationale: WO 2024/052468

(56) Documents cités:
- WO-A1-2021/167374
- FR-A1- 3 014 229
- US-A1- 2015 085 114
- US-A1- 2016 180 667

## Description

### Domaine technique :

L'invention se situe dans le domaine de la détection d'objet d'intérêt sur des images capturées par des dispositifs d'acquisition d'images et trouve un intérêt tout particulier dans les systèmes de télécommunication tactiques, par exemple déployés localement et ponctuellement sur un terrain d'intervention, par exemple sanitaire ou militaire (une zone de catastrophe, géologique ou autre, une zone de conflit etc.), dans lequel des dispositifs d'acquisition, dans des engins mobiles, capturent des images et effectuent une détection/classification d'objets types dans les images, les résultats de cette détection étant ensuite transmis à un dispositif récepteur distant.

### Technique antérieure :

Les caractéristiques de transmission ne sont pas stables dans de tels contextes : elles sont fréquemment rompues sans préavis (par exemple par brouillage intentionnel), ou connaissent des occurrences, bien plus fréquentes que dans les réseaux grands publics classiques, de variations de capacités du réseau de transmission, par exemple en termes de bande passante ou de latence.

Les solutions existantes font la détection et suivi de l'objet d'intérêt au niveau du capteur, par des circuits programmés qui réalisent ces fonctions à partir de l'image captée. Ou bien la transmission de l'image en entier prend beaucoup de bande passante, qui n'est généralement pas disponible, ou bien les méthodes de transmission de région d'intérêt (ROI) par les standards de compression d'image/vidéo conduisent à des zones mal délimitées, ou avec des artefacts sur les bords, ou requiert plus de bande passante que disponible.

Même dans le cas de transmission de région d'intérêt, souvent le reste de l'image est transmis aussi, à bas débit, ce qui en fait n'est pas nécessaire pour l'application (détection d'un petit objet dans une grande image). La transmission par toutes ces méthodes à travers un réseau à bande passante limitée conduit également à des délais dans la réception de l'information, qui ne sont pas compatibles avec le temps réel nécessaire pour la décision basée sur la détection attendue.

Les capteurs optroniques font l'acquisition des images et vidéos très haute résolution pour la détection de cibles d'intérêt. Cependant, la transmission de cette quantité de données est parfois impossible, dans les conditions de réseaux de transmission à bande limitée entre le capteur e tle récepteur.

Il existe donc un besoin de permettre une détection plus fiable dans un contexte de transmission instable, i.e même à faible débit.

### Résumé de l'invention :

A cet effet, suivant un premier aspect, la présente invention décrit un procédé de transmission de données de détection d'objets types mis en œuvre par un dispositif émetteur à destination d'un récepteur via au moins une liaison de transmission sans fil, le dispositif émetteur comprenant un bloc de capture d'images et un bloc de détection détectant si des objets types définis dans une liste prédéfinie sont présents dans une image capturée par le bloc de capture et selon quelle probabilité de détection,
ledit procédé comprenant, après que le processus de détection ait été effectué sur une image capturée, les étapes suivantes mises en œuvre par le dispositif émetteur :
- s'il a été déterminé pour l'image considérée une probabilité de détection supérieure à un seuil prédéterminé S pour un objet type et que l'état courant de la liaison de transmission ne vérifie pas des conditions de transmission seuil prédéfinies, alors le dispositif émetteur applique les règles suivantes pour déterminer le contenu à transmettre relativement à l'image :
   - aucune transmission d'une portion de l'image comportant ledit objet type détecté n'est effectuée ;
   - transmission de données indiquant au moins d'un identifiant de l'objet type détecté, la probabilité de détection dudit objet et une position géographique ;
- si, pour l'image considérée, il n'a pas été déterminé une probabilité de détection supérieur audit seuil prédéterminé S mais qu'il a été déterminé une probabilité de détection comprise entre ledit seuil S et un autre seuil S' prédéterminé strictement inférieur à S et strictement positif, alors le dispositif émetteur applique les règles suivantes pour déterminer le contenu à transmettre relativement à l'image :
   - transmission d'au moins une portion de l'image comportant ledit objet type détecté associée à des données indiquant au moins d'un identifiant de l'objet type détecté, la probabilité de détection dudit objet et une position géographique, et selon lequel avant transmission, une compression d'image est sélectivement appliquée à ladite portion d'image en fonction de l'état courant de la liaison de transmission, y compris pour des états de liaison de transmission ne vérifiant pas lesdites conditions de transmission seuil prédéfinies ; la portion d'image étant, suite à ladite compression, transmise sous forme compressée.

Dans des modes de réalisation, un tel procédé comprendra en outre l'une au moins des caractéristiques suivantes :
- le mode de compression étant sélectionné entre plusieurs modes de compression en fonction dudit état courant de liaison de transmission ;
- s'il a été déterminé pour l'image considérée une probabilité de détection supérieure au seuil prédéterminé S pour au moins un objet type et que l'état courant de la liaison de transmission vérifie lesdites conditions de transmission seuil prédéfinies, alors le dispositif émetteur applique les règles suivantes pour déterminer le contenu à transmettre relativement à l'image : transmission d'au moins une portion de l'image comportant ledit objet type détecté associée à des données indiquant au moins d'un identifiant de l'objet type détecté, la probabilité de détection dudit objet et une position géographique.

Suivant un autre aspect, la présente invention est relative à un dispositif émetteur, ledit dispositif étant adapté pour transmettre des données de détection d'objets types à destination d'un récepteur via au moins une liaison de transmission sans fil, et comprenant un bloc de capture d'images et un bloc de détection adapté pour détecter si des objets types définis dans une liste prédéfinie sont présents dans une image capturée par le bloc de capture et selon quelle probabilité de détection, ledit dispositif émetteur étant adapté pour, après que le processus de détection a été effectué par le bloc de détection sur une image capturée par le bloc de capture, s'il a été déterminé pour l'image considérée une probabilité de détection supérieure à un seuil prédéterminé S pour un objet type et que l'état courant de la liaison de transmission ne vérifie pas des conditions de transmission seuil prédéfinies, appliquer les règles suivantes pour déterminer le contenu à transmettre relativement à l'image :
- aucune transmission d'une portion de l'image comportant ledit objet type détecté n'est effectuée ;
- transmission de données indiquant au moins d'un identifiant de l'objet type détecté, la probabilité de détection dudit objet et une position géographique ; ledit dispositif émetteur étant adapté pour, après que le processus de détection a été effectué par le bloc de détection sur une image capturée par le bloc de capture, si, pour l'image considérée, il n'a pas été déterminé une probabilité de détection supérieur audit seuil prédéterminé S mais qu'il a été déterminé une probabilité de détection comprise entre ledit seuil S et un autre seuil S' prédéterminé strictement inférieur à S et strictement positif, appliquer les règles suivantes pour déterminer le contenu à transmettre relativement à l'image :
   - transmission d'au moins une portion de l'image comportant ledit objet type détecté associée à des données indiquant au moins d'un identifiant de l'objet type détecté, la probabilité de détection dudit objet et une position géographique, et avant transmission, appliquer une compression d'image sélectivement à ladite portion d'image en fonction de l'état courant de la liaison de transmission, y compris pour des états de liaison de transmission ne vérifiant pas lesdites conditions de transmission seuil prédéfinies ; la portion d'image étant, suite à ladite compression, transmise sous forme compressée.

Suivant un autre aspect, l'invention décrit un procédé de traitement mis en œuvre dans un dispositif électronique récepteur recevant, via des liaisons de transmission sans fil, des données de détection en provenance d'une pluralité de dispositifs d'acquisition capturant des images et détectant si des objets types définis dans une liste prédéfinie sont présents dans une image capturée, le dispositif récepteur comprenant une base stockant des caractéristiques visuelles associées respectivement à des identifiants d'objets types, ledit procédé comprenant les étapes suivantes mises en œuvre par le dispositif récepteur :
i/ réception de données de détection en provenance d'un dispositif d'acquisition indiquant au moins d'un identifiant de l'objet type détecté dans une image, la probabilité de détection dudit objet et une position géographique ;
ii/ détermination de si ladite image ou si une portion de ladite image comprenant l'objet type détecté est présente dans lesdites données de détection ; ii_1/ s'il a été déterminé que ni ladite image, ni une portion de ladite image comprenant l'objet type détecté ne sont présentes dans lesdites données de détection, reconstruction de l'objet type en fonction d'au moins les caractéristiques visuelles associées à son identifiant indiqué dans les données de détection reçues stockées dans la base et insertion dudit objet type reconstruit dans une image globale en fonction d'au moins ladite position géographique ; ii_2/ s'il a été déterminé que ladite image ou une portion de ladite image comprenant l'objet type détecté est présente dans lesdites données de détection : détermination de si au moins une autre image ou portion d'image a été précédemment reçue en provenance d'un autre dispositif d'acquisition dans des données de détection indiquant la même position géographique ; si au moins une autre image ou portion d'image a été précédemment reçue en provenance d'un autre dispositif d'acquisition dans des données de détection indiquant la même position géographique, obtention d'une troisième image ou portion d'image par combinaison de ladite image ou portion de ladite image avec ladite autre image ou portion d'image et application d'un traitement de détection des objets types de la liste prédéfinie sur ladite troisième image ou portion d'image obtenue déterminant si un ou des objets de la liste délivrant des données de détection.

Dans des modes de réalisation dudit procédé de traitement :
- la détection, lors de l'étape ii_2 dans ladite troisième image ou portion d'image un objet type avec une probabilité de détection inférieure à S, déclenche la transmission par le récepteur à au moins un des deux dispositifs d'acquisition d'une requête d'une nouvelle capture d'image associée en ladite position géographique ;
- l'étape ii_2 comprend au moins l'une des deux étapes suivantes parmi : si aucune autre image ou portion d'image n'a été précédemment reçue en provenance d'un autre dispositif d'acquisition dans des données de détection indiquant la même position géographique, insertion de l'image ou de portion d'image dans une image globale en fonction d'au moins ladite position géographique ; si au moins une autre image ou portion d'image a été précédemment reçue en provenance d'un autre dispositif d'acquisition dans des données de détection indiquant la même position géographique insertion de ladite troisième image ou portion d'image dans une image globale en fonction d'au moins ladite position géographique.
- le récepteur déclenche une action à l'issue de l'étape ii_1 ou ii_2, en fonction d'au moins les données de détection parmi :
   déclenchement d'une alarme ;
   requête d'une capture d'image supplémentaire à ladite position géographique ; détermination de commande de pilotage d'engins mobiles transportant lesdits dispositifs d'acquisition, en fonction de ladite position géographique ; commande d'effecteurs en fonction de ladite position géographique ;
- à l'étape ii_2/, un traitement de décompression de ladite image ou portion d'image est effectué selon un mode de décompression sélectionné parmi plusieurs en fonction d'une indication figurant dans lesdites données de détection reçues.

Suivant un autre aspect, l'invention décrit un dispositif récepteur adapté pour recevoir, via des liaisons de transmission sans fil, des données de détection en provenance d'une pluralité de dispositifs d'acquisition capturant des images et détectant si des objets types définis dans une liste prédéfinie sont présents dans une image capturée, le dispositif récepteur comprenant une base stockant des caractéristiques visuelles associées respectivement à des identifiants d'objets types, ledit dispositif récepteur étant adapté pour recevoir des données de détection en provenance d'un dispositif d'acquisition indiquant au moins d'un identifiant de l'objet type détecté dans une image, la probabilité de détection dudit objet et une position géographique, pour déterminer si ladite image ou si une portion de ladite image comprenant l'objet type détecté est présente dans lesdites données de détection ; ledit dispositif récepteur étant adapté pour, s'il a été déterminé que ni ladite image, ni une portion de ladite image comprenant l'objet type détecté ne sont présentes dans lesdites données de détection, reconstruire l'objet type en fonction d'au moins les caractéristiques visuelles associées à son identifiant indiqué dans les données de détection reçues stockées dans la base et pour insérer ledit objet type reconstruit dans une image globale en fonction d'au moins ladite position géographique ; ledit dispositif récepteur étant adapté pour, s'il a été déterminé que ladite image ou une portion de ladite image comprenant l'objet type détecté est présente dans lesdites données de détection, déterminer si au moins une autre image ou portion d'image a été précédemment reçue en provenance d'un autre dispositif d'acquisition dans des données de détection indiquant la même position géographique ; et ledit dispositif récepteur est adapté pour, si au moins une autre image ou portion d'image a été précédemment reçue en provenance d'un autre dispositif d'acquisition dans des données de détection indiquant la même position géographique, obtenir une troisième image ou portion d'image par combinaison de ladite image ou portion de ladite image avec ladite autre image ou portion d'image et appliquer un traitement de détection des objets types de la liste prédéfinie sur ladite troisième image ou portion d'image obtenue déterminant si un ou des objets de la liste délivrant des données de détection.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
[Fig. 1] La figure 1 est une représentation schématique d'un système de télécommunication dans un mode de réalisation de l'invention ;
[Fig. 2] La figure 2 illustre les étapes d'un procédé selon l'invention mis en œuvre par un dispositif d'acquisition de données dans un mode de réalisation ;
[Fig. 3] La figure 3 illustre les étapes d'un procédé selon l'invention mis en œuvre par un récepteur de données transmises dans un mode de réalisation.

Des références identiques peuvent être utilisées dans des figures différentes lorsqu'elles désignent des éléments identiques ou comparables.

### Description détaillée :

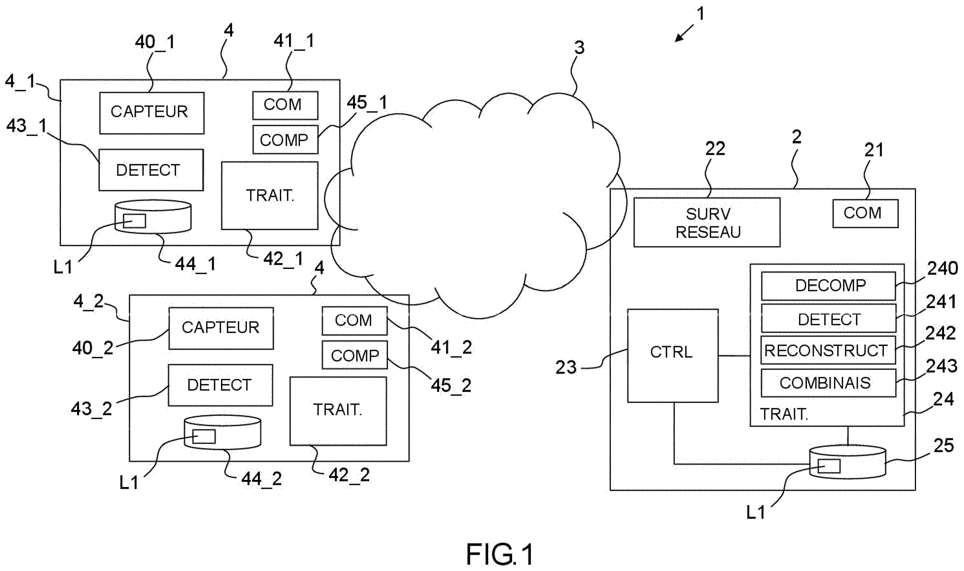

Sur la figure 1 est représenté un système de télécommunication 1 dans un mode de réalisation de l'invention.

Le système de télécommunication 1 comprend d dispositifs électroniques d'acquisition de données 4, au moins un dispositif électronique récepteur de données 2 et un réseau de télécommunication 3. La valeur de d est supérieure ou égale à 1, typiquement supérieure ou égale à deux et dans le cas représenté en figure 1, d = 2 : les dispositifs électroniques d'acquisition de données 4 du système 1 comprenant le dispositif électronique d'acquisition de données 4_1 et le dispositif électronique d'acquisition de données 4_2.

Le réseau 3 comprend des liaisons de télécommunication sans fil au moins entre d'une part le récepteur 2 et d'autre part chaque dispositif d'acquisition de données 4_i, i = 1 à 2.

Par exemple, le réseau 3 comporte une liaison UHF entre le récepteur 2 et le dispositif d'acquisition de données 4_1 et une liaison VHF entre le récepteur 2 et le dispositif d'acquisition de données 4_2 (le type de liaison sans fil peut en réalité être quelconque, par exemple satellite ...).

Dans un mode de réalisation, le système de télécommunication 1 est un système tactique, déployé localement et ponctuellement sur un terrain d'intervention critique.

Dans des modes de réalisation, les dispositifs électroniques d'acquisition de données 4 sont embarqués dans des engins mobiles, tels que des engins volants (avion, drone, satellite ...), roulants ou flottants.

Par exemple, le dispositif électronique d'acquisition de données 4_1 est embarqué dans un avion (non représenté) et le dispositif électronique d'acquisition de données 4_2 est embarqué dans un drone (non représenté). Les dispositifs électroniques d'acquisition de données 4 sont chacun adaptés pour faire l'acquisition d'images, pour les traiter et en extraire des données, et pour transmettre ces données au récepteur 2.

Dans l'exemple considéré, le récepteur 2 est fixe ou bien également embarqué, par exemple dans un véhicule destiné à la coordination de l'intervention et situé à quelques km en retrait de la zone d'intervention sur laquelle opèrent les dispositifs d'acquisition 4_1 et 4_2.

Dans le mode de réalisation considéré, chaque dispositif d'acquisition de données 4_i, i = 1 à 2, comprend au moins un capteur 40_i, un bloc de communication 41_i, un bloc de traitement 42_i, un bloc de détection 43_i, une mémoire 44_i et un bloc de compression d'images 45_i.

Le capteur 40_i est adapté pour capturer des images de la zone d'intervention à une fréquence fc prédéterminée. Le capteur 40_i est par exemple de type optronique et délivre des images RGB (ou infrarouges, thermiques ou multispectrales etc.).

Les capteurs 40_i dans des dispositifs distincts ou au sein d'un même dispositif ont par exemple des caractéristiques distinctes. Par exemple, le capteur 40_1 délivre des images de taille 40000 pixels x 40000 pixels, tandis que le capteur 40_2 délivre des images de taille 4000 pixels x 4000 pixels.

Le bloc de communication 41_i est adapté à mettre en œuvre, sur le réseau de télécommunication sans fil 3, la transmission d'informations à destination du récepteur 2. Il comporte par exemple un modem, un routeur, un module gestionnaire de la Qualité de Service (qui contribue à la remontée du gabarit de transport sélectionné par le réseau, et donc la sélection du mode de fonctionnement du capteur 40_i, cf. plus loin) et une antenne d'émission/réception sans fil.

Le bloc de détection 43_i est adapté pour, à partir de chaque image capturée par le capteur 40_i, procéder à une détection d'objets d'intérêt et délivrer en sortie le cas échéant des informations concernant des objets qui auraient été détectés dans l'image comme correspondant à des types objets d'intérêt prédéfinis.

Les types d'objets d'intérêts sont listés dans une liste L1 stockée dans la mémoire 44_i. Cette liste L1 associe un identifiant à chaque type d'objets d'intérêt. La structure de la liste est par exemple arborescente, identifiant des grandes classes d'objet d'intérêt (par exemple avions, chars, camions, drones), puis pour chaque classe, des sous-classes (marques de l'objet, fonctionnalité principale : transport de troupes, transport de combustibles, infirmerie ...), les feuilles de l'arbre étant donc les types d'objets d'intérêt, au nombre de N, par exemple N est supérieur ou égal à deux, ou encore strictement supérieur à deux, par exemple dans le cas considéré, N est supérieur à 10.

Le bloc de détection 43.i comporte un classifieur adapté pour décomposer l'image fournie en entrée en portions d'images et évaluer, à l'aide d'algorithmes de classification, la probabilité de détection dans chaque portion, d'un des types d'objets d'intérêt. Cette probabilité de détection pour un type d'objet d'intérêt indique la probabilité, calculée par le bloc de détection, qu'un objet de ce type soit effectivement présent dans la portion considérée.

Par exemple, dans le cas considéré, le classifieur est un réseau de neurones à apprentissage profond. Il est adapté pour balayer complétement une image capturée par un « filtre ». Ce filtre, en chaque position de balayage, ne laisse apparaître qu'une section de l'image, appelée par la suite imagette (par exemple la première imagette est obtenue en partant du coin en haut à gauche de l'image, en déplaçant (glissant) le filtre vers la droite jusqu'à atteindre le coin en haut à droite, puis en descendant vers le bas et en repartant vers la gauche etc. jusqu'à atteindre le coin en bas à droite). Le classifieur est adapté pour calculer, pour chaque imagette, et pour chaque type objet d'intérêt de la liste L1, la probabilité, nommée Prob, qu'un objet d'intérêt de ce type, figure sur l'imagette considérée.

Dans un mode de réalisation, deux imagettes successives se superposent sur une portion des imagettes, la taille de cette portion étant strictement inférieure à la taille des imagettes.

Le filtre, de façon connue, est appelé boîte englobante (« bounding box »), il est classiquement rectangulaire, l'imagette correspondant à la section de l'image dans le rectangle. Chaque imagette rectangulaire résultante est associée aux coordonnées, dans l'image, du coin supérieur gauche du rectangle, et sa longueur et sa largeur sont connues, égales à celles du filtre.

Typiquement, pour une image de dimensions 10000 pixels par 10000 pixels, et une bounding box de taille 200 pixels par 200 pixels qui glisse de 5 pixels, le nombre d'imagettes résultant est 2000 x 2000 soit 4 millions.

Dans le mode de réalisation considéré, les détecteurs 43_1 et 43_2 délivrent tous deux des imagettes de même taille (ici 200*200 pixels²), mais les résolutions des imagettes sont différentes : les 200 pixels d'imagette correspondent à 500 mètres (m) dans le cas du dispositif d'acquisition de données 4_1 tandis que les 200 pixels d'imagette correspondent à 1 km dans le cas du le dispositif d'acquisition de données 4_2.

Typiquement, le classifieur est issu d'une phase d'apprentissage au cours de laquelle ses paramètres (typiquement les valeurs poids et biais du réseau de neurones) ont été apprises, à l'aide d'une base de données d'apprentissage comprenant des imagettes, notamment des imagettes préalablement associées chacune à au moins un des objets types de la liste et ce jusqu'à ce que l'erreur de prédiction devienne inférieure à un seuil fixé.

Le bloc de détection 43_i est adapté pour délivrer au bloc de traitement 42_i, pour une image qui lui est fournie en entrée :
- sélectivement toutes les imagettes extraites de l'image pour lesquelles au moins un type d'objet d'intérêt a été détecté avec une probabilité de détection supérieure à un seuil S' (par exemple S' dans la plage [60% ; 70%] ; et
- un ensemble d'informations associé à chaque imagette.

L'ensemble d'informations, nommé ENS_{info}, associé à chaque imagette délivrée par le bloc de détection 43_i comprend ainsi, pour chaque type d'objet d'intérêt détecté dans l'image avec une probabilité supérieure à S', les informations suivantes, ou au moins certaines informations parmi les suivantes :
- la probabilité de détection, Prob, calculée ;
- l'identifiant, selon la liste L1, du type d'objet détecté avec cette probabilité;
- la position de l'imagette dans l'image ;
- les coordonnées, par exemple GPS, de l'objet correspondant au type détecté dans l'imagette (déterminé par le dispositif d'acquisition 4_i en fonction de la position de l'imagette, de celle du dispositif d'acquisition 4_i (par exemple fourni par l'engin mobile dans lequel se trouve le dispositif d'acquisition 4_i), et des caractéristiques de capture d'image (orientation capteur, zoom, ...) ;
- la couleur de l'objet ;
- les dimensions de l'objet correspondant audit type d'objet d'intérêt, de manière absolue ou de manière relative par rapport aux dimensions de l'imagette ;
- l'orientation par rapport à -un axe prédéfini- de l'imagette de l'objet détecté (en fonction d'un axe prédéfini de l'objet d'intérêt type correspondant) ;
- les paramètres de capture d'image (orientation capteur, altitude, zoom, horodatage).

Le bloc de traitement 42_i est adapté pour recevoir un état de la liaison de transmission (ou des liaisons s'il y en a plusieurs) entre le dispositif d'acquisition 4_i et le récepteur 2.

Cet état indique en temps réel par exemple un ou plusieurs éléments parmi la bande passante actuellement offerte par la liaison, son taux d'erreur, sa latence, sa gigue...

Dans un mode de réalisation, le bloc de traitement 42_i reçoit cet état à une fréquence prédéfinie, qui peut aller de n centaines de ms (par exemple n supérieur à 1, ou 2) à N dizaines de minutes (par exemple N supérieur à 1, ou 2), et dont la valeur est fixée en fonction d'un compromis entre réactivité et consommation de ressources pour traiter ces états. Dans un autre mode de réalisation, il reçoit cet état quand un ou des seuils prédéfinis et relatifs notamment aux éléments mentionnés ont été franchis (seuil de bande passante etc...)

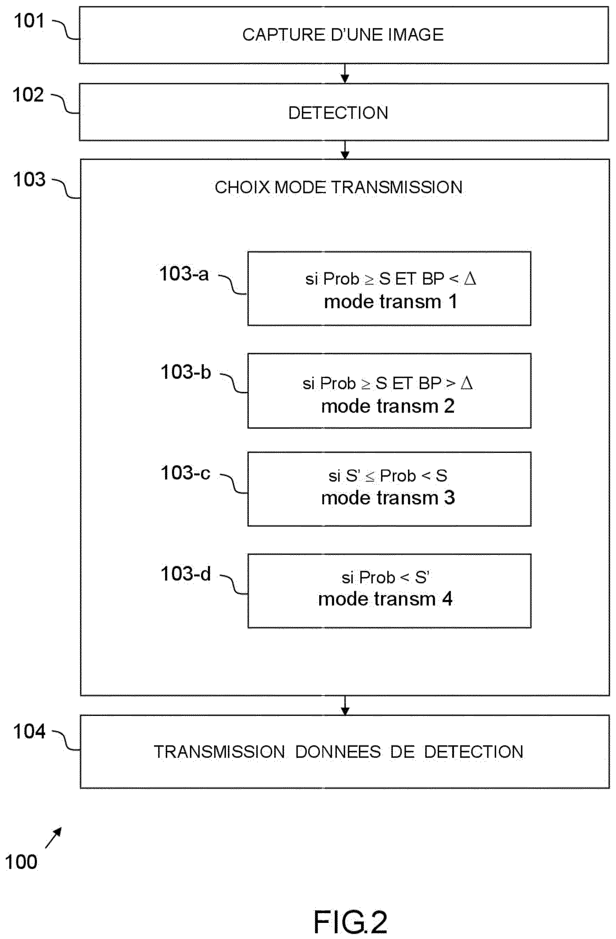

Le bloc de traitement 42_i est adapté pour, en fonction de cet état courant de la liaison de transmission vers le récepteur 2 et du résultat de la détection effectuée par le bloc de détection, sélectionner ce qui sera transmis au récepteur 2 concernant ce résultat de détection, comme décrit plus bas en référence à la figure 2 dans le mode de réalisation considéré. Le bloc de traitement 42_i comprend par exemple un microprocesseur (non représenté) sur lequel des instructions logicielles, stockées dans la mémoire 44_i, s'exécutent, mettant alors en œuvre les étapes décrites en référence à la figure 2 et incombant au bloc de traitement 42_i. Le bloc de traitement 42_i est adapté pour commander des compressions d'imagettes au bloc de compression 45_i.

La figure 2 décrit des étapes d'un procédé 100 de détection d'objets d'intérêt mis en œuvre, dans un mode de réalisation de l'invention, par un dispositif d'acquisition 4_i, i = 1 à 2.

Dans une étape 101, le capteur capture une image IMG et la fournit en entrée du bloc de détection 43_i. Dans une étape 102, le bloc de détection 43_i effectue la détection imagette par imagette, en déterminant, relativement à chacune d'entre elles, la probabilité de détection de chaque objet type de la liste L1 et l'ensemble d'informations ENS_{info} associé à l'imagette pour les objets types détectés avec une probabilité de détection supérieure ou égale à S'. Le bloc de détection 43_i délivre au bloc de traitement 42_i, pour chaque image qui lui est fournie en entrée les imagettes extraites de l'image pour lesquelles au moins un type d'objet d'intérêt a été détecté avec une probabilité de détection supérieure à un seuil S' et l'ensemble d'informations ENS_{info} associé à chaque imagette.

Dans une étape 103, le bloc de traitement 42_i est contraint à déterminer, pour chaque imagette reçue, en fonction du dernier état courant de la liaison de transmission vers le récepteur 2 reçu et de l'ensemble d'informations ENS_{info} associé à l'imagette, ce qui est transmis au récepteur 2 concernant ce résultat de détection, de la manière suivante, dans un mode de réalisation. Cette étape 103 suivant les cas correspond à l'étape 103_ a ou à l'étape 103_ b ou à l'étape 103_ c ou encore à l'étape 103_ d.

S'il a été déterminé pour l'imagette considérée une probabilité de détection Prob ≥ S pour un objet type et que l'état de la liaison de transmission ne vérifie pas des conditions de transmission seuil prédéfinies (typiquement la bande passante est inférieure à un seuil prédéfini, nommé Δ), alors l'imagette elle-même ne fera pas partie des données transmises au récepteur 2 ; elle en est exclue : dans une étape 103_a, le bloc de traitement 42_i fournit au bloc de communication 41_i, pour ce qui concerne l'imagette considérée, les données de détection à transmettre au récepteur 2. Ces données de détection comprennent l'ensemble d'informations ENS_{info} qui est associé à l'imagette et qui ne comprennent donc pas l'imagette elle-même (même pas sous forme compressée) (mode de transmission 1).

S est un seuil de valeur prédéfinie. S est supérieur à S' (par exemple S est supérieur ou égal à 80%).

Les conditions de transmission seuil prédéfinies outre un seuil de bande passante Δ peuvent comprendre à la place ou en outre un seuil de latence et/ou un seuil de qualité de transmission (ces dispositions permettent de prendre en compte respectivement une notion d'urgence dans la réception qui pourrait être incompatible de la latence de la liaison, ou une notion de qualité dans la transmission qui pourrait être incompatible du taux d'erreur de la liaison).

Ce mode de transmission 1 est basé sur la compression « sémantique » d'une imagette, permet de réduire significativement le débit (typiquement d'un facteur 10), en transmettant seulement les identifiants des « objets » prédéfinis dans un dictionnaire, avec leurs position, dimension et quelques caractéristiques (mais pas les imagettes).

S'il a été déterminé pour l'imagette considérée une probabilité de détection Prob ≥ S pour un objet type et que l'état de la liaison de transmission vérifient les conditions de transmission minimales prédéfinies, alors l'imagette fera cette fois partie des données à transmettre au récepteur 2 : dans une étape 103_b, le bloc de traitement 42_i fournit cette fois au bloc de communication 41_i, pour ce qui concerne l'imagette considérée, les données de détection à transmettre au récepteur 2, qui comprennent l'imagette et l'ensemble d'informations ENS_{info} qui est associé à l'imagette. Les données d'imagette à transmettre sont les pixels de l'imagette ou au moins déterminées en fonction de ces pixels d'imagette, après un éventuel traitement de compression d'images effectué par le bloc de compression d'images 45_i et sélectionné par le bloc de traitement parmi plusieurs modes de compression d'images en fonction du dernier état courant de transmission reçu et optionnellement d'un délai de transmission imposé (mode de transmission 2).

Si aucune probabilité de détection associée à l'imagette considérée n'est supérieure ou égale à S, mais qu'il existe au moins une probabilité de détection associée à l'imagette supérieure ou égale à S' (i.e. comprise entre S' et S), alors dans une étape 103_c, le bloc de traitement 42_i fournit au bloc de communication 41_i, pour ce qui concerne l'imagette considérée, les données de détection à transmettre au récepteur 2, qui comprennent l'imagette et l'ensemble d'informations ENS_{info} associé à l'imagette. Les données d'imagette à transmettre sont les pixels de l'imagette ou au moins déterminées en fonction de ces pixels d'imagette, après un éventuel traitement de compression d'images sélectionné parmi plusieurs modes de compression d'images en fonction du dernier état courant de transmission et optionnellement d'un délai de transmission imposé (mode de transmission 3).

Par exemple, et sans que ces exemples soient limitatifs, les différents modes de compression d'imagettes que le bloc de compression d'images 45_i est adapté à effectuer comprennent un mode de compression JPEG et/ou un mode JPEG2000 et/ou un mode INTRA de standards de compression vidéo h264 et/ou un mode HEVC.

Et la sélection, en fonction du dernier état courant de transmission reçu et optionnellement d'un délai de transmission imposé, du mode de compression parmi ceux disponibles est effectuée en fonction de comparaison avec des seuils de bande passante (plus globalement du ou des seuils associés aux conditions de transmission seuil évoquées ci-dessus) respectivement associés à chaque mode de compression.

Et ce traitement est effectué indépendamment du seuil Δ considéré au cas 103_a ; en particulier, même si la bande passante courante est inférieure à Δ considéré au cas 103_a, l'imagette est transmise.

La probabilité de détection étant alors inférieure à S, mais supérieure à S', on suspecte qu'il y a un objet d'intérêt dans l'imagette sans être en mesure toutefois de faire de la compression sémantique. Il convient donc de transmettre l'imagette au récepteur pour traitement complémentaire. En revanche, les conditions de transport constatées vont permettre de choisir le mode de compression le plus adapté aux ressources de transmission disponibles.

Si aucune probabilité de détection associée à l'imagette considérée n'est supérieure ou égale à S', mais que le bloc d'acquisition 4_i a reçu une requête du récepteur de fournir l'imagette (ou l'image à laquelle l'imagette appartient), alors dans une étape 103_d, le bloc de traitement 42_i fournit au bloc de communication 41_i, les données de détection à transmettre au récepteur 2, qui comprennent l'imagette et l'ensemble d'informations ENS_{info} qui est associé à l'imagette. Les données d'imagette à transmettre sont les pixels de l'imagette ou au moins déterminées en fonction de ces pixels d'imagette, après un éventuel traitement de compression d'images sélectionné parmi plusieurs modes de compression d'images en fonction du dernier état courant de transmission et optionnellement d'un délai de transmission imposé (mode de transmission 4).

Les données de détection à transmettre comprenant une image compressée indiquent en outre le type de compression effectué.

Si aucune probabilité de détection associée à l'imagette considérée n'est supérieure ou égale à S', et que le bloc d'acquisition 4_i n'a reçu aucune requête du récepteur de fournir l'imagette (ou l'image à laquelle l'imagette appartient), alors rien ne sera préparé par le bloc de traitement 42_i, ni transmis via le bloc de communication 41_i au récepteur 2.

Dans les autres cas, i.e. suite à l'étape 103_a, 103_b, 103_c ou 103_d, les données de détection fournies par le bloc de traitement 42_i et relatives à une imagette considérée sont transmises dans une étape 104 par le bloc de communication 41_i, via la liaison reliant le dispositif d'acquisition 4_i, au récepteur 2.

La présente invention permet de gérer au mieux la bande passante disponible : ainsi si cette dernière n'est pas abondante (i.e. inférieure à une bande passante seuil Δ) mais que la détection effectuée par le dispositif d'acquisition a permis de une détection quasi certaine (= probabilité de détection supérieure à S), on se contente de transmettre le résultat de la détection, sans l'imagette ; en revanche si la probabilité de détection est intermédiaire, i.e. comprise entre S' et S, l'imagette est transmise : cette disposition va permettre de compléter la détection au niveau du récepteur 2 et d'obtenir au final une détection plus fiable.

Dans le mode de réalisation considéré, le dispositif électronique récepteur de données 2 comprend un module de télécommunication 21, un module de surveillance réseau 22, un module de contrôle 23, un module de traitement 24 et une mémoire 25.

Bien sûr, la syntaxe relative aux données de détection échangées est connue des dispositifs d'acquisition et du récepteur 2.

La mémoire 25 stocke la même liste L1 des objets types d'intérêt que la mémoire 44_i des dispositifs d'acquisition 4_i, i = 1, 2.

Le module de communication 21 est adapté à mettre en œuvre, sur le réseau de télécommunication sans fil 3, la transmission d'informations à destination des dispositifs d'acquisition 4. Il comporte par exemple un modem, un routeur, un module gestionnaire de la Qualité de Service (qui contribue à la remontée du gabarit de transport sélectionné par le réseau, et donc la sélection du mode de fonctionnement du capteur 40_i, cf. plus loin) et une antenne d'émission/réception sans fil.

Le module de surveillance réseau 22 est adapté pour surveiller les liaisons de communication avec les dispositifs d'acquisition, pour, en fonction des données échangées avec eux (typiquement des échanges de signalisation réseau réalisés entre les routeurs du réseau), déterminer un état courant de chacune des liaisons entre le récepteur 2 et un dispositif d'acquisition 4_i, i = 1 à 2 comprenant par exemple la valeur des paramètres bande passante, taux d'erreur, latence et/ou gigue, et pour transmettre, au (routeur du) dispositif d'acquisition 4_i, l'état courant des liaisons (I.e. la signalisation du réseau) le concernant et pour transmettre aux dispositifs à la fréquence indiquée plus haut (dans un mode de réalisation alternatif, l'état est envoyé seulement quand une variation d'un paramètre de l'état supérieure à un seuil fixé a lieu).

Le module de contrôle 23 est adapté pour déterminer, en fonction de données en provenance d'un dispositif d'acquisition 4_i, i = 1 ou 2, le traitement à effectuer et pour commander ce traitement au module de traitement 24.

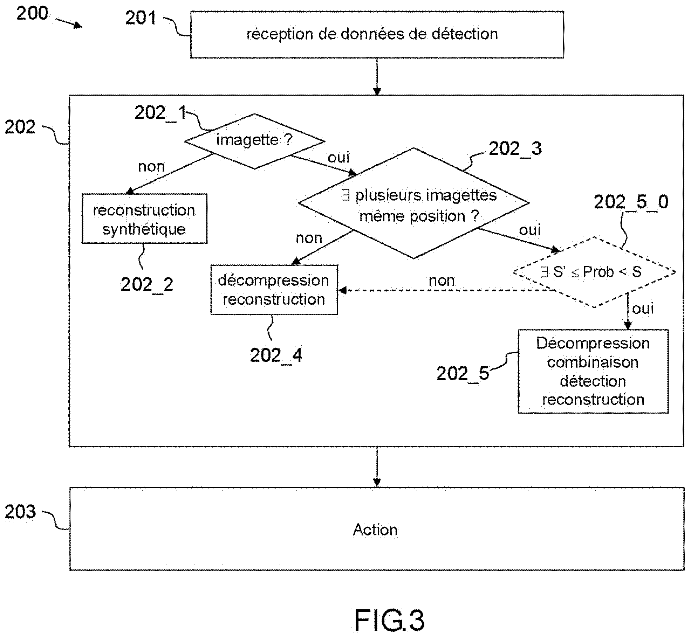

Le module de contrôle 23 comprend par exemple un microprocesseur (non représenté) sur lequel des instructions logicielles, stockées dans la mémoire 25, s'exécutent, mettant alors en œuvre les étapes décrites en référence à la figure 3 et incombant au module de contrôle 23.

Le module de traitement 24 est adapté pour effectuer une pluralité de traitements d'image. A cette fin, il comporte une unité de décompression d'images 240, une unité de détection 241, une unité de reconstruction d'images 242 et une unité de combinaison 243.

L'unité de détection 241 est adaptée pour détecter sur des imagettes qui lui sont fournies en entrée des objets types de la liste L1. Il est par exemple similaire au bloc de détection 43_i, i= 1 ou 2 ou plus performant (par exemple avec des ressources de calcul plus puissante, et/ou avec davantage de sous-classes) et est adapté pour calculer, pour chaque imagette qui lui est fournie en entrée, et pour chaque type d'objet d'intérêt de la liste L1, la probabilité, nommée Prob, qu'un objet d'intérêt de ce type, figure sur l'imagette considérée.

Le détail du procédé 200 mis en œuvre par le dispositif récepteur 2 est décrit plus bas en référence à la figure 3.

Dans une étape 201, le module de communication 21 reçoit des données de détection relatives à une imagette obtenues et les délivre au module de contrôle 23.

Le module de contrôle 23 détermine alors le traitement à effectuer sur ces données dans une étape 202, détaillée ci-dessous.

Le module de contrôle 23 identifie si ces données de détection comprennent ou non une imagette, dans une étape 202_1.

Si elles ne comprennent pas d'imagette, elles correspondent à un mode de transmission 1 (étape 103_a), sans imagette. Le module de contrôle 23, dans une étape 202_2 extrait les caractéristiques de chaque objet détecté indiquées dans les données de détection (identifiant de liste L1, couleur, orientation, dimensions, coordonnées ...) et les fournit alors à l'unité de reconstruction 242, en lui commandant la reconstruction de chaque objet détecté. Le module de reconstruction 242 reconstruit alors l'objet (ou les objets détectés) avec les caractéristiques fournies par le module de contrôle 23 et en outre des caractéristiques visuelles affectées dans sa mémoire 25 pour l'identifiant et situe l'objet ainsi reconstruit « synthétiquement » (i.e. à partir des données de contexte figurant dans les données de détection et de données visuelles stockées au récepteur) non à partir d'une imagette fournie par le dispositif d'acquisition) sur une carte géographique électronique ou sur une image globale de la zone d'intervention, réactualisant/complétant ainsi la vue disponible de la zone.

L'invention permet ainsi, notamment quand la probabilité de détection est supérieure à S, de ne pas transmettre l'imagette compressée, mais de transmettre l'identifiant d'objet détecté et des données de contexte, l'objet identifié étant reconstruit synthétiquement au récepteur à partir d'une base de données des représentations visuelles des objets, identifiés par leur identifiant.

Si alternativement, le module de contrôle 23 identifie à l'étape 202_1, que ces données de réception comprennent une imagette, le module de contrôle 23 détermine alors dans une étape 202_3 s'il dispose d'autres imagettes provenant des dispositifs d'acquisition 4_1 et 4_2 et correspondant au même temps de capture (moyennant une tolérance par exemple) et à la même position géographique que ladite imagette.

Dans le cas où il détermine qu'il ne dispose pas d'autres telles imagettes, le module de contrôle 23 dans une étape 202_4 commande la décompression (correspondant au mode de compression effectué, indiqué dans les données de détection) de l'imagette à l'unité de décompression 240 et commande à l'unité de reconstruction 242 de procéder à la reconstruction d'image en insérant l'imagette décompressée sur une carte géographique électronique ou sur une image globale de la zone précédemment reçue.

Dans le cas où il détermine à l'étape 202_3 qu'il dispose au contraire d'autres telles imagettes, le module de contrôle 23, dans une étape 202_5, commande la décompression (correspondant au mode de compression effectué) de l'imagette à l'unité de décompression 240. Il fournit cette imagette décompressée et les autres imagettes dont il dispose, elles-aussi décompressées, à l'unité de combinaison 243 en lui commandant la mise en œuvre par cette dernière d'un traitement de combinaison. L'unité de combinaison 243 combine les différentes imagettes à l'aide de techniques par exemple de Multiple Description Coding ou de super-résolution (il effectue en outre le cas échéant les correspondances de mise à l'échelle) et obtient une imagette résultante issue de cette combinaison, dans laquelle la résolution et la qualité d'image reconstruite ont été améliorées par rapport aux imagettes d'entrée. Puis le module de contrôle 23 commande un traitement de détection sur cette imagette résultante à l'unité de détection 241. L'unité de détection 241 détermine s'il existe dans l'image résultante au moins un objet correspondant à un type d'objet d'intérêt de la liste L1 et calcule la probabilité de détection associée. Puis le module de contrôle 23 commande à l'unité de reconstruction 242 de procéder à la reconstruction d'image en insérant l'imagette combinée sur une carte géographique électronique ou sur une image globale de la zone précédemment reçue, si au moins un objet a été détecté avec une probabilité supérieure ou égale à S'sur l'imagette combinée.

La présente invention permet ainsi d'améliorer la précision de détection d'un objet d'intérêt à partir des imagettes provenant notamment de dispositifs d'acquisition différents. Dans le cas où un dispositif d'acquisition n'a pas une probabilité de détection et de classification suffisante, la combinaison de plusieurs imagettes de la même localisation, provenant de plusieurs capteurs augmente la précision. L'invention permet notamment de combiner des imagettes qui ne permettent pas séparément d'avoir une classification correcte, en augmentant la probabilité de classification.

Dans un mode de réalisation, il n'est procédé à l'étape 202_5 qu'en fonction d'une étape 202_5_0 préalable dans laquelle le module de contrôle 23 détermine si dans l'imagette considérée et/ou les autres imagettes correspondant à la même position géographique et au même temps de capture, il existe, d'après les données de détection comprenant chacune de ces imagettes, un ou des objets détectés avec une probabilité de détection comprise entre S' et S (ceci est indiqué dans les ensembles d'information accompagnant les imagettes). Si non (i.e. toutes les probabilités de détection sont supérieures à S), l'étape 202_5 n'est dans ce cas pas réalisée et l'étape 202_4 est mise en œuvre à la place.

Dans un mode de réalisation, l'insertion d'une imagette (ou d'un objet reconstruit synthétiquement) sur une carte géographique électronique ou sur une image globale de la zone précédemment reçue est effectuée en mettant en évidence (par exemple avec un couleur spécifique prédéterminée ou avec un contouring très manifeste, les objets pour lequel une probabilité de détection supérieure à S1 a été calculée et comprend également l'affichage de la probabilité de détection associée sur la carte/image globale.

Dans une étape 203, qui fait suite à l'étape 202, le module de contrôle 23, dans un mode de réalisation, déclenche d'autres actions : en fonction par exemple d'un ou de plusieurs objets détectés tels qu'indiqués dans les données de détection reçues à l'étape 201 ou détectés en 202_5, il peut commander l'une et ou l'autre des opérations suivantes :
- déclenchement d'alerte ;
- envoi d'effecteurs (missiles, engins de reconnaissance) à une localisation définie en fonction des coordonnées de l'objet détecté (ou des objets détectés) ;
- fourniture de commandes de pilotage à l'engin mobile transportant le dispositif d'acquisition 4_1 (et/ou 4_2) définies en fonction des coordonnées de l'objet détecté (ou des objets détectés) ;
- envoi via le réseau 3 d'une requête au dispositif d'acquisition 4_1 requérant une nouvelle capture d'images ;
Une telle capture d'images est par exemple requise lorsque la probabilité de détection calculée à l'étape 202_5 est inférieure à S (et par exemple supérieure à S').

Selon l'invention, on sélectionne ce qui est transmis d'une détection initiale en fonction de la probabilité de détection et en fonction d'un état courant de transmission ; un mode de compression d'imagettes est sélectionné (quand une imagette est transmise). L'invention permet de tirer au mieux parti des conditions de transmission réelles vers le récepteur 2 en fonction des probabilités de détection et d'améliorer la prise de décision le cas échéant dans le récepteur 2, avec des données issues de plusieurs dispositifs d'acquisition.

Les détections ci-dessus ont été décrites comme mises en œuvre par des classifieurs à base de réseau de neurones, les classifieurs peuvent toutefois être basés sur tout type de technologies alternatives, par exemple arbres de décision, SVM etc.

L'invention a été décrite ci-dessus en considérant des portions de l'image initiale ; dans un autre mode de réalisation, c'est l'image entière qui est considérée et non des portions.

## Revendications

1. Procédé de transmission de données de détection d'objets types mis en œuvre par un dispositif émetteur (4_1) à destination d'un récepteur (2) via au moins une liaison de transmission sans fil (3), le dispositif émetteur (4_1) comprenant un bloc de capture d'images (40_1) et un bloc de détection (43_1) détectant si des objets types définis dans une liste prédéfinie (L1) sont présents dans une image capturée par le bloc de capture (40_1) et selon quelle probabilité de détection,
ledit procédé comprenant, après que le processus de détection ait été effectué sur une image capturée, les étapes suivantes mises en œuvre par le dispositif émetteur (4_1) :
- s'il a été déterminé pour l'image considérée une probabilité de détection supérieure à un seuil prédéterminé S pour un objet type et que l'état courant de la liaison de transmission ne vérifie pas des conditions de transmission seuil prédéfinies, alors le dispositif émetteur (4_1) applique les règles suivantes pour déterminer le contenu à transmettre relativement à l'image :
- aucune transmission d'une portion de l'image comportant ledit objet type détecté n'est effectuée ;
- transmission de données indiquant au moins d'un identifiant de l'objet type détecté, la probabilité de détection dudit objet et une position géographique ;
- si, pour l'image considérée, il n'a pas été déterminé une probabilité de détection supérieur audit seuil prédéterminé S mais qu'il a été déterminé une probabilité de détection comprise entre ledit seuil S et un autre seuil S' prédéterminé strictement inférieur à S et strictement positif, alors le dispositif émetteur (4_1) applique les règles suivantes pour déterminer le contenu à transmettre relativement à l'image :
- transmission d'au moins une portion de l'image comportant ledit objet type détecté associée à des données indiquant au moins d'un identifiant de l'objet type détecté, la probabilité de détection dudit objet et une position géographique, et selon lequel avant transmission, une compression d'image est sélectivement appliquée à ladite portion d'image en fonction de l'état courant de la liaison de transmission, y compris pour des états de liaison de transmission ne vérifiant pas lesdites conditions de transmission seuil prédéfinies ; la portion d'image étant, suite à ladite compression, transmise sous forme compressée.

2. Procédé de transmission de données selon la revendication 1, selon lequel le mode de compression étant sélectionné entre plusieurs modes de compression en fonction dudit état courant de liaison de transmission.

3. Procédé de transmission de données selon la revendication 1 ou 2, selon lequel s'il a été déterminé pour l'image considérée une probabilité de détection supérieure au seuil prédéterminé S pour au moins un objet type et que l'état courant de la liaison de transmission vérifie lesdites conditions de transmission seuil prédéfinies,
alors le dispositif émetteur (4_1) applique les règles suivantes pour déterminer le contenu à transmettre relativement à l'image :
- transmission d'au moins une portion de l'image comportant ledit objet type détecté associée à des données indiquant au moins d'un identifiant de l'objet type détecté, la probabilité de détection dudit objet et une position géographique.

4. Dispositif émetteur (4_1), ledit dispositif étant adapté pour transmettre des données de détection d'objets types à destination d'un récepteur (2) via au moins une liaison de transmission sans fil (3), et comprenant un bloc de capture d'images (40_1) et un bloc de détection (43_1) adapté pour détecter si des objets types définis dans une liste prédéfinie (L1) sont présents dans une image capturée par le bloc de capture et selon quelle probabilité de détection,
ledit dispositif émetteur (4_1) étant adapté pour, après que le processus de détection a été effectué par le bloc de détection sur une image capturée par le bloc de capture, s'il a été déterminé pour l'image considérée une probabilité de détection supérieure à un seuil prédéterminé S pour un objet type et que l'état courant de la liaison de transmission ne vérifie pas des conditions de transmission seuil prédéfinies, appliquer les règles suivantes pour déterminer le contenu à transmettre relativement à l'image :
- aucune transmission d'une portion de l'image comportant ledit objet type détecté n'est effectuée ;
- transmission de données indiquant au moins d'un identifiant de l'objet type détecté, la probabilité de détection dudit objet et une position géographique ;
ledit dispositif émetteur (4_1) étant adapté pour, après que le processus de détection a été effectué par le bloc de détection sur une image capturée par le bloc de capture, si, pour l'image considérée, il n'a pas été déterminé une probabilité de détection supérieur audit seuil prédéterminé S mais qu'il a été déterminé une probabilité de détection comprise entre ledit seuil S et un autre seuil S' prédéterminé strictement inférieur à S et strictement positif, appliquer les règles suivantes pour déterminer le contenu à transmettre relativement à l'image :
- transmission d'au moins une portion de l'image comportant ledit objet type détecté associée à des données indiquant au moins d'un identifiant de l'objet type détecté, la probabilité de détection dudit objet et une position géographique, et avant transmission, appliquer une compression d'image sélectivement à ladite portion d'image en fonction de l'état courant de la liaison de transmission, y compris pour des états de liaison de transmission ne vérifiant pas lesdites conditions de transmission seuil prédéfinies ; la portion d'image étant, suite à ladite compression, transmise sous forme compressée.

5. Procédé de traitement mis en œuvre dans un dispositif électronique récepteur (2) recevant, via des liaisons de transmission sans fil, des données de détection en provenance d'une pluralité de dispositifs d'acquisition (1) capturant des images et détectant si des objets types définis dans une liste prédéfinie sont présents dans une image capturée, le dispositif récepteur comprenant une base stockant des caractéristiques visuelles associées respectivement à des identifiants d'objets types, ledit procédé comprenant les étapes suivantes mises en œuvre par le dispositif récepteur :
i/ réception de données de détection en provenance d'un dispositif d'acquisition indiquant au moins d'un identifiant de l'objet type détecté dans une image, la probabilité de détection dudit objet et une position géographique ;
ii/ détermination de si ladite image ou si une portion de ladite image comprenant l'objet type détecté est présente dans lesdites données de détection ;
ii_1/ s'il a été déterminé que ni ladite image, ni une portion de ladite image comprenant l'objet type détecté ne sont présentes dans lesdites données de détection, reconstruction de l'objet type en fonction d'au moins les caractéristiques visuelles associées à son identifiant indiqué dans les données de détection reçues stockées dans la base et insertion dudit objet type reconstruit dans une image globale en fonction d'au moins ladite position géographique ;
ii_2/ s'il a été déterminé que ladite image ou une portion de ladite image comprenant l'objet type détecté est présente dans lesdites données de détection :
détermination de si au moins une autre image ou portion d'image a été précédemment reçue en provenance d'un autre dispositif d'acquisition dans des données de détection indiquant la même position géographique ;
si au moins une autre image ou portion d'image a été précédemment reçue en provenance d'un autre dispositif d'acquisition dans des données de détection indiquant la même position géographique, obtention d'une troisième image ou portion d'image par combinaison de ladite image ou portion de ladite image avec ladite autre image ou portion d'image et application d'un traitement de détection des objets types de la liste prédéfinie sur ladite troisième image ou portion d'image obtenue déterminant si un ou des objets de la liste délivrant des données de détection.

6. Procédé de traitement selon la revendication 5, selon lequel la détection, lors de l'étape ii_2 dans ladite troisième image ou portion d'image un objet type avec une probabilité de détection inférieure à S, déclenche la transmission par le récepteur à au moins un des deux dispositifs d'acquisition d'une requête d'une nouvelle capture d'image associée en ladite position géographique.

7. Procédé de traitement selon la revendication 5 ou 6, comprenant au moins, dans l'étape ii_2, l'une des deux étapes suivantes parmi :
si aucune autre image ou portion d'image n'a été précédemment reçue en provenance d'un autre dispositif d'acquisition dans des données de détection indiquant la même position géographique, insertion de l'image ou de portion d'image dans une image globale en fonction d'au moins ladite position géographique ;
si au moins une autre image ou portion d'image a été précédemment reçue en provenance d'un autre dispositif d'acquisition dans des données de détection indiquant la même position géographique insertion de ladite troisième image ou portion d'image dans une image globale en fonction d'au moins ladite position géographique.

8. Procédé de traitement selon l'une des revendications précédentes, suivant lequel le récepteur déclenche une action à l'issue de l'étape ii_1 ou ii_2, en fonction d'au moins les données de détection parmi :
déclenchement d'une alarme ;
requête d'une capture d'image supplémentaire à ladite position géographique ;
détermination de commande de pilotage d'engins mobiles transportant lesdits dispositifs d'acquisition, en fonction de ladite position géographique ;
commande d'effecteurs en fonction de ladite position géographique.

9. Procédé de traitement selon l'une des revendication 5 à 8, selon lequel, à l'étape ii_2/, un traitement de décompression de ladite image ou portion d'image est effectué selon un mode de décompression sélectionné parmi plusieurs en fonction d'une indication figurant dans lesdites données de détection reçues.

10. Dispositif récepteur (2) adapté pour recevoir, via des liaisons de transmission sans fil, des données de détection en provenance d'une pluralité de dispositifs d'acquisition (1) capturant des images et détectant si des objets types définis dans une liste prédéfinie sont présents dans une image capturée, le dispositif récepteur comprenant une base stockant des caractéristiques visuelles associées respectivement à des identifiants d'objets types,
ledit dispositif récepteur (2) étant adapté pour recevoir des données de détection en provenance d'un dispositif d'acquisition indiquant au moins d'un identifiant de l'objet type détecté dans une image, la probabilité de détection dudit objet et une position géographique, pour déterminer si ladite image ou si une portion de ladite image comprenant l'objet type détecté est présente dans lesdites données de détection ;
ledit dispositif récepteur étant adapté pour, s'il a été déterminé que ni ladite image, ni une portion de ladite image comprenant l'objet type détecté ne sont présentes dans lesdites données de détection, reconstruire l'objet type en fonction d'au moins les caractéristiques visuelles associées à son identifiant indiqué dans les données de détection reçues stockées dans la base et pour insérer ledit objet type reconstruit dans une image globale en fonction d'au moins ladite position géographique ;
ledit dispositif récepteur étant adapté pour, s'il a été déterminé que ladite image ou une portion de ladite image comprenant l'objet type détecté est présente dans lesdites données de détection, déterminer si au moins une autre image ou portion d'image a été précédemment reçue en provenance d'un autre dispositif d'acquisition dans des données de détection indiquant la même position géographique ; et ledit dispositif récepteur est adapté pour, si au moins une autre image ou portion d'image a été précédemment reçue en provenance d'un autre dispositif d'acquisition dans des données de détection indiquant la même position géographique, obtenir une troisième image ou portion d'image par combinaison de ladite image ou portion de ladite image avec ladite autre image ou portion d'image et appliquer un traitement de détection des objets types de la liste prédéfinie sur ladite troisième image ou portion d'image obtenue déterminant si un ou des objets de la liste délivrant des données de détection.

## Patentansprüche

1. Verfahren zur Übertragung von Standardobjekterkennungsdaten, das von einer Sendevorrichtung (4_1) umgesetzt wird, an einen Empfänger (2) über mindestens eine drahtlose Übertragungsverbindung (3), wobei die Sendevorrichtung (4_1) einen Bildaufnahmeblock (40_1) und einen Erkennungsblock (43_1) umfasst, der erkennt, ob in einer vordefinierten Liste (L1) definierten Standardobjekte in einem Bild vorhanden sind, das von dem Aufnahmeblock (40_1) aufgenommen worden ist, und gemäß welcher Erkennungswahrscheinlichkeit,
wobei das Verfahren, nachdem der Erkennungsprozess an einem aufgenommenen Bild durchgeführt worden ist, die folgenden Schritte, die von der Sendevorrichtung (4_1) umgesetzt werden, umfasst:
- wenn für das betrachtete Bild eine Erkennungswahrscheinlichkeit bestimmt worden ist, die größer als eine vorbestimmte Schwelle S für ein Standardobjekt ist, und der aktuelle Zustand der Übertragungsverbindung keine vorbestimmten Schwellenübertragungsbedingungen verifiziert, wendet die Sendevorrichtung (4_1) dann die folgenden Regeln an, um den in Bezug auf das Bild zu übertragenden Inhalt zu bestimmen:
- keine Übertragung eines Abschnitts des Bildes, der das erkannte Standardobjekt beinhaltet, wird durchgeführt;
- Übertragung von Daten, die von einer Kennung des erkannten Standardobjekts mindestens die Erkennungswahrscheinlichkeit des Objekts und eine geografische Position angeben;
- wenn für das betrachtete Bild keine Erkennungswahrscheinlichkeit bestimmt worden ist, die größer als die vorbestimmte Schwelle S ist, jedoch eine Erkennungswahrscheinlichkeit bestimmt worden ist, die zwischen der Schwelle S und einer anderen vorbestimmten Schwelle S', streng kleiner als S und streng positiv, umfasst ist, wendet die Sendevorrichtung (4_1) dann die folgenden Regeln an, um den in Bezug auf das Bild zu übertragenden Inhalt zu bestimmen:
- Übertragen mindestens eines Abschnitts des Bildes, der das erkannte Standardobjekt umfasst, der Daten zugeordnet ist, die von einer Kennung des erkannten Standardobjekts die Erkennungswahrscheinlichkeit des Objekts und eine geografische Position angeben, und wobei vor dem Übertragen eine Bildkompression selektiv auf den Bildabschnitt in Abhängigkeit vom aktuellen Zustand der Übertragungsverbindung, inklusive für Übertragungsverbindungszustände angewendet wird, welche die vorbestimmten Schwellenübertragungsbedingungen nicht verifizieren; wobei der Bildabschnitt nach der Kompression in komprimierter Form übertragen wird.

2. Verfahren zur Datenübertragung nach Anspruch 1, wobei der Kompressionsmodus aus mehreren Kompressionsmodi in Abhängigkeit vom aktuellen Übertragungsverbindungszustand ausgewählt wird.

3. Verfahren zur Datenübertragung nach Anspruch 1 oder 2, wobei, wenn für das betrachtete Bild eine Erkennungswahrscheinlichkeit bestimmt worden ist, die größer als die vorbestimmte Schwelle S für mindestens ein Standardobjekt ist, und der aktuelle Übertragungsverbindungszustand die vorbestimmten Schwellenübertragungsbedingungen verifiziert,
die Sendevorrichtung (4_1) die folgenden Regeln anwendet, um den in Bezug auf das Bild zu übertragenden Inhalt zu bestimmen:
- Übertragen mindestens eines Abschnitts des Bildes, der das erkannte Standardobjekt umfasst, der Daten zugeordnet ist, die von einer Kennung des erkannten Standardobjekts mindestens die Erkennungswahrscheinlichkeit des Objekts und eine geografische Position angeben.

4. Sendevorrichtung (4_1), wobei die Vorrichtung angepasst ist, um Standardobjekterkennungsdaten an einen Empfänger (2) über mindestens eine drahtlose Übertragungsverbindung (3) zu übertragen, und einen Bildaufnahmeblock (40_1) und einen Erkennungsblock (43_1) umfasst, der angepasst ist, um zu erkennen, ob die in einer vordefinierten Liste (L1) definierten Standardobjekte in einem Bild vorhanden sind, das von dem Aufnahmeblock aufgenommen worden ist, und gemäß welcher Erkennungswahrscheinlichkeit,
wobei die Sendevorrichtung (4_1) angepasst ist, um, nachdem der Erkennungsprozess durch den Erkennungsblock an einem durch den Aufnahmeblock aufgenommenen Bild durchgeführt worden ist, wenn für das betrachtete Bild eine Erkennungswahrscheinlichkeit bestimmt worden ist, die größer als eine vorbestimmte Schwelle S für ein Standardobjekt ist, und der aktuelle Zustand der Übertragungsverbindung keine vorbestimmten Schwellenübertragungsbedingungen verifiziert, die folgenden Regeln anzuwenden, um den in Bezug auf das Bild zu übertragenden Inhalt zu bestimmen:
- keine Übertragung eines Abschnitts des Bildes, der das erkannte Standardobjekt beinhaltet, wird durchgeführt;
- Übertragung von Daten, die von einer Kennung des erkannten Standardobjekts mindestens die Erkennungswahrscheinlichkeit des Objekts und eine geografische Position angeben;
wobei die Sendevorrichtung (4_1) angepasst ist, um, nachdem der Erkennungsprozess durch den Erkennungsblock an einem durch den Aufnahmeblock aufgenommenen Bild durchgeführt worden ist, wenn für das betrachtete Bild keine Erkennungswahrscheinlichkeit bestimmt worden ist, die größer als die vorbestimmte Schwelle S ist, jedoch eine Erkennungswahrscheinlichkeit bestimmt worden ist, die zwischen der Schwelle S und einer anderen vorbestimmten Schwelle S', streng kleiner als S und streng positiv, umfasst ist, die folgenden Regeln anzuwenden, um den in Bezug auf das Bild zu übertragenden Inhalt zu bestimmen:
- Übertragen mindestens eines Abschnitts des Bildes, der das erkannte Standardobjekt umfasst, der Daten zugeordnet ist, die von einer Kennung des erkannten Standardobjekts die Erkennungswahrscheinlichkeit des Objekts und eine geografische Position angeben, und vor dem Übertragen eine Bildkompression selektiv auf den Bildabschnitt in Abhängigkeit vom aktuellen Zustand der Übertragungsverbindung, inklusive für Übertragungsverbindungszustände anwenden, welche die vorbestimmten Schwellenübertragungsbedingungen nicht verifizieren; wobei der Bildabschnitt nach der Kompression in komprimierter Form übertragen wird.

5. Bearbeitungsverfahren, das in einer elektronischen Empfangsvorrichtung (2) umgesetzt wird, die über drahtlose Übertragungsverbindungen Erkennungsdaten aus einer Vielzahl von Erfassungsvorrichtungen (1) empfängt, die Bilder aufnehmen und erkennen, ob in einer vordefinierten Liste definierte Standardobjekte in einem aufgenommenen Bild vorhanden sind, wobei die Empfangsvorrichtung eine Basis umfasst, die visuelle Eigenschaften speichert, die jeweils Standardobjektkennungen zugeordnet sind, wobei das Verfahren die folgenden von der Empfangsvorrichtung umgesetzten Schritte umfasst:
i/ Empfangen von Erkennungsdaten von einer Erfassungsvorrichtung, die von einer Kennung des in dem Bild erkannten Standardobjekts mindestens die Erkennungswahrscheinlichkeit des Objekts und eine geografische Position angeben;
ii/ Bestimmen, ob das Bild, oder ob der Abschnitt des Bildes, der das erkannte Standardobjekt umfasst, in den Erkennungsdaten vorhanden ist;
ii_1/ wenn bestimmt worden ist, dass weder das Bild, noch ein Abschnitt des Bildes, die das erkannte Standardobjekt umfassen, in den Erkennungsdaten vorhanden sind, Wiederaufbau des Standardobjekts in Abhängigkeit von mindestens den visuellen Eigenschaften, die dessen Kennung zugeordnet sind, die in den empfangenen Erkennungsdaten angegeben ist, die in der Basis gespeichert sind, und Einfügen des wieder aufgebauten Standardobjekts in ein globales Bild in Abhängigkeit von mindestens der geografischen Position;
ii_2/ wenn bestimmt worden ist, dass das Bild oder ein Abschnitt des Bildes, der das erkannte Standardobjekt umfasst, in den Erkennungsdaten vorhanden ist:
Bestimmen, ob mindestens ein anderes Bild oder Bildabschnitt zuvor von einer anderen Erfassungsvorrichtung empfangen worden ist, in Erkennungsdaten, welche die gleiche geografische Position angeben;
wenn mindestens ein anderes Bild oder Bildabschnitt zuvor von einer anderen Erfassungsvorrichtung in Erkennungsdaten empfangen worden ist, welche die gleiche geografische Position angeben, Erhalten eines dritten Bildes oder Bildabschnitts durch Kombinieren des Bildes oder Abschnitts des Bildes mit dem anderen Bild oder Bildabschnitt und Anwenden einer Erkennungsbearbeitung der Standardobjekte aus der vordefinierten Liste auf dem dritten erhaltenen Bild oder Bildabschnitt, welcher(s) bestimmt, ob ein oder mehrere Objekte aus der Liste Erkennungsdaten erteilen.

6. Bearbeitungsverfahren nach Anspruch 5, wobei das Erkennen im Schritt ii_2 im dritten Bild oder Bildabschnitt eines Standardobjekts mit einer Erkennungswahrscheinlichkeit kleiner als S, die Übertragung durch den Empfänger an mindestens eine der beiden Erfassungsvorrichtungen einer Anfrage für eine neue zugeordnete Bildaufnahme in der geografischen Position auslöst.

7. Bearbeitungsverfahren nach Anspruch 5 oder 6, in Schritt ii_2, mindestens den einen der beiden Schritte umfassend, aus
wenn kein anderes Bild oder Bildabschnitt zuvor von einer anderen Erfassungsvorrichtung empfangen worden ist, in Erkennungsdaten, welche die gleiche geografische Position angeben, Einfügen des Bildes oder Bildabschnitts in ein globales Bild in Abhängigkeit von mindestens der geografischen Position;
wenn mindestens ein anderes Bild oder Bildabschnitt zuvor von einer anderen Erfassungsvorrichtung empfangen worden ist, in Erkennungsdaten, welche die gleiche geografische Position angeben, Einfügen des dritten Bildes oder Bildabschnitts in ein globales Bild in Abhängigkeit von mindestens der geografischen Position.

8. Bearbeitungsverfahren nach einem der vorstehenden Ansprüche, wobei der Empfänger eine Aktion am Ende des Schrittes ii_1 oder ii_2 in Abhängigkeit von mindestens den Erkennungsdaten auslöst aus:
Auslösen eines Alarms;
Anfragen einer zusätzlichen Bildaufnahme an der geografischen Position;
Bestimmen von Steuerbefehlen für bewegliche Maschinen, welche die Erfassungsvorrichtungen transportieren in Abhängigkeit von der geografischen Position;
Effektorenbefehl in Abhängigkeit von der geografischen Position.

9. Bearbeitungsverfahren nach einem der Ansprüche 5 bis 8, wobei in Schritt ii_2/ eine Dekompressionsbearbeitung des Bildes oder Bildabschnitts gemäß einem ausgewählten Dekompressionsmodus aus mehreren in Abhängigkeit von einer Angabe durchgeführt wird, die in den empfangenen Erkennungsdaten vorkommt.

10. Empfangsvorrichtung (2), die angepasst ist, um über drahtlose Übertragungsverbindungen Erkennungsdaten aus einer Vielzahl von Erfassungsvorrichtungen (1) zu empfangen, die Bilder aufnehmen und erkennen, ob in einer vordefinierten Liste definierte Standardobjekte in einem aufgenommenen Bild vorhanden sind, wobei die Empfangsvorrichtung eine Basis umfasst, die visuelle Eigenschaften speichert, die jeweils Standardobjektkennungen zugeordnet sind,
wobei die Empfangsvorrichtung (2) angepasst ist, um Erkennungsdaten von einer Erfassungsvorrichtung zu empfangen, die aus einer Kennung des erkannten Standardobjekts in einem Bild mindestens die Erkennungswahrscheinlichkeit des Objekts und eine geografische Position angeben, um zu bestimmen, ob das Bild oder ein Abschnitt des Bildes, das/der das erkannte Standardobjekt umfasst, in den Erkennungsdaten vorhanden ist;
wobei die Empfangsvorrichtung angepasst ist, um, wenn bestimmt worden ist, dass weder das Bild, noch ein Abschnitt des Bildes, die das erkannte Standardobjekt umfassen, in den Erkennungsdaten vorhanden sind, das Standardobjekt in Abhängigkeit von mindestens den visuellen Eigenschaften, die dessen Kennung zugeordnet sind, die in den empfangenen Erkennungsdaten angegeben ist, die in der Basis gespeichert sind, wieder aufzubauen, um das wieder aufgebaute Standardobjekt in ein globales Bild in Abhängigkeit von mindestens der geografischen Position einzufügen;
wobei die Empfangsvorrichtung angepasst ist, um, wenn bestimmt worden ist, dass das Bild oder ein Abschnitt des Bildes, das/der das erkannte Standardobjekt umfasst, in den Erkennungsdaten vorhanden ist, zu bestimmen, ob mindestens ein anderes Bild oder Bildabschnitt zuvor von einer anderen Erfassungsvorrichtung in Erkennungsdaten empfangen worden ist, welche die gleiche geografische Position angeben; und wobei die Empfangsvorrichtung angepasst ist, um, wenn mindestens ein anderes Bild oder Bildabschnitt zuvor von einer anderen Erfassungsvorrichtung in Erkennungsdaten empfangen worden ist, welche die gleiche geografische Position angeben, ein drittes Bild oder Bildabschnitt durch Kombinieren des Bildes oder Bildabschnitts mit dem anderen Bild oder Bildabschnitt zu erhalten, und eine Erkennungsbearbeitung der Standardobjekte aus der vordefinierten Liste auf das erhaltene dritte Bild oder Bildabschnitt anzuwenden, welches(r) bestimmt, ob ein oder mehrere Objekte aus der Liste Erkennungsdaten erteilen.

## Claims

1. Method for transmitting type object detection data implemented by a transmitter device (4_1) intended for a receiver (2) via at least one wireless transmission link (3), the transmitter device (4_1) comprising an image capture unit (40_1) and a detection unit (43_1) detecting if type objects defined in a predefined list (L1) are present in an image captured by the capture unit (40_1) and according to which detection probability,
said method comprising, after the detection process has been carried out on a captured image, the following steps implemented by the transmitter device (4_1):
- if a detection probability greater than a predetermined threshold S for a type object has been determined for the considered image, and if the current state of the transmission link does not verify predefined threshold transmission conditions, then the transmitter device (4_1) applies the following rules to determine the content to transmit relative to the image:
- not transmitting a portion of the image comprising said detected type object is not carried out;
- transmitting data indicating at least one of an identifier of the detected type object, the detection probability of said object and a geographical position;
- if, for the considered image, a detection probability greater than said predetermined threshold S has not been determined, but if a detection probability of between said threshold S and another predetermined threshold S' strictly less than S and strictly positive has been determined, then the transmitter device (4_1) applies the following rules to determine the content to transmit relative to the image:
- transmitting at least one portion of the image comprising said detected type object associated with data indicating at least one of an identifier of the detected type object, the detection probability of said object and a geographical position, and whereby, before transmission, an image compression is selectively applied to said image portion as a function of the current state of the transmission link, including for transmission link states not verifying said predefined threshold transmission conditions; the image portion being, following said compression, transmitted in compressed form.

2. Data transmission method according to claim 1, whereby the compression mode being selected between several compression modes as a function of said transmission link current state.

3. Data transmission method according to claim 1 or 2, whereby if a detection probability greater than the predetermined threshold S for at least one type object has been determined for the considered image, and if the current state of the transmission link verifies said predefined threshold transmission conditions,
then, the transmitter device (4_1) applies the following rules to determine the content to transmit relative to the image:
- transmitting at least one portion of the image comprising said detected type object associated with data indicating at least one of an identifier of the detected type object, the detection probability of said object and a geographical position.

4. Transmitter device (4_1), said device being adapted to transmit type object detection data intended for a receiver (2) via at least one wireless transmission link (3), and comprising an image capture unit (40_1) and a detection unit (43_1) adapted to detect if type objects defined in a predefined list (L1) are present in an image captured by the capture unit and according to which detection probability,
said transmitter device (4_1) being adapted to, after the detection process has been carried out by the detection unit on a captured image by the capture unit, if a detection probability greater than a predetermined threshold S for a type object has been determined for the considered image, and if the current state of the transmission link does not verify predefined threshold transmission conditions, apply the following rules to determine the content to transmit relative to the image:
- not transmitting a portion of the image comprising said detected type object is not carried out;
- transmitting data indicating at least one of an identifier of the detected type object, the detection probability of said object and a geographical position;
said transmitter device (4_1) being adapted to, after the detection process has been carried out by the detection unit on an image captured by the capture unit, if, for the considered image, a detection probability greater than said predetermined threshold S has not been determined, but if a detection probability of between said threshold S and another predetermined threshold S' strictly less than S and strictly positive has been determined, apply the following rules to determine the content to transmit relative to the image:
- transmitting at least one portion of the image comprising said detected type object associated with data indicating at least one of an identifier of the detected type object, the detection probability of said object and a geographical position, and before transmission, applying an image compression selectively to said image portion as a function of the current state of the transmission link, including for transmission link states not verifying said predefined threshold transmission conditions; the image portion being, following said compression, transmitted in compressed form.

5. Processing method implemented in a receiver electronic device (2) receiving, via wireless transmission links, detection data coming from a plurality of acquisition devices (1) capturing images, and detecting if type objects defined in a predefined list are present in a captured image, the receiver device comprising a base storing visual characteristics associated respectively with type object identifiers, said method comprising the following steps implemented by the receiver device:
i/ recieving detection data coming from an acquisition device indicating at least one of an identifier of the type object detected in an image, the detection probability of said object and a geographical position;
ii/ determining if said image or if a portion of said image comprising the detected type object is present in said detection data;
ii_1/ if it has been determined that neither said image, nor a portion of said image comprising the detected type object are present in said detection data, reconstructing the type object as a function of at least the visual characteristics associated with its identifier indicated in the received detection data stored in the base and inserting said reconstructed type object in an overall image as a function of at least said geographical position;
ii_2/ if it has been determined that said image or a portion of said image comprising the detected type object is present in said detection data:
determining if at least one other image or image portion has been received beforehand coming from another acquisition device in detection data indicating the same geographical position;
if at least one other image or image portion has been received beforehand coming from another acquisition device in detection data indicating the same geographical position, obtaining of a third image or image portion by combining said image or portion of said image with said other image or image portion and application of a detection processing of type objects of the predefined list on said third image or image portion obtained, determining if one or more objects of the list delivering detection data.

6. Processing method according to claim 5, whereby the detection, during step ii_2 in said third image or image portion, a type image with a detection probability less than S, triggers the transmission by the receiver to at least one of the two acquisition devices of a request of a new associated image capture in said geographical position.

7. Processing method according to claim 5 or 6, comprising at least, in step ii_2, one of the two following steps, from among:
if no other image or image portion has been received beforehand coming from another acquisition device in detection data indicating the same geographical position, inserting the image or of image portion in an overall image as a function of at least said geographical position;
if at least one other image or image portion has been received beforehand coming from another acquisition device in detection data indicating the same geographical position, inserting said third image or image portion in an overall image as a function of at least said geographical position.

8. Processing method according to any one of the preceding claims, whereby the receiver triggers an action coming from step ii_1 or ii_2, as a function of at least the detection data, from among:
triggering of an alarm;
requesting an image capture additional to said geographical position;
determining a command for controlling movable vehicles transporting said acquisition devices, as a function of said geographical position;
controlling effectors, as a function of said geographical position.

9. Processing method according to any one of claims 5 to 8, whereby, in step ii_2/, a decompression processing of said image or image portion is carried out according to a decompression mode selected from among several, as a function of an indication appearing in said received detection data.

10. Receiver device (2) adapted to receive, via wireless transmission links, detection data coming from a plurality of acquisition devices (1) capturing images, and detecting if type objects defined in a predefined list are present in a captured image, the receiver device comprising a base storing visual characteristics associated respectively with type object identifiers,
said receiver device (2) being adapted to receiver detection data coming from an acquisition device indicating at least one of an identifier of the type object detected in an image, the detection probability of said object and a geographical position, to determine if said image or if a portion of said image comprising the detected type object is present in said detection data;
said receiver device being adapted to, if it has been determined that neither said image, nor a portion of said image comprising the detected type object are present in said detection data, reconstruct the type object as a function of at least the visual characteristics associated with its identifier indicated in the received detection data stored in the base and to insert said reconstructed type object in an overall image as a function of at least said geographical position;
said receiver device being adapted to, if it has been determined if said image or a portion of said image comprising the detected type object is present in said detection data, determine if at least one other image or image portion has been received beforehand coming from another acquisition device in detection data indicating the same geographical position; and said receiver device is adapted to, if at least one other image or image portion has been received beforehand coming from another acquisition device in detection data indicating the same geographical position, obtain a third image or image portion by combining said image or portion of said image with said other image or image portion and apply a detection processing of said image with said other image or image portion and apply a detection processing of type objects of the predefined list on said third image or image portion obtained, determining if one or more objects of the list delivering detection data.
